# EUROPEAN PATENT SPECIFICATION

(11) **EP 1 142 230 B1**
(45) Date of publication and mention of the grant of the patent: **17.03.2004**
(21) Application number: 00900844.2
(22) Date of filing: 20.01.2000
(51) Int. Cl.: H04L 12/58, G06F 17/60, H04L 12/28

(54) **ELECTRONIC MAIL ADVERTISEMENT SYSTEM**
ELEKTRONISCHES POST-WERBESYSTEM
SYSTEME DE PUBLICITE PAR COURRIER ELECTRONIQUE

(30) Priority: 22.01.1999 JP 1484599
(43) Date of publication of application: 10.10.2001
(73) Proprietor: Sony Computer Entertainment Inc., Tokyo 107-0052 (JP)
(72) Inventor: KAWAI, Eiji, Sony Computer Entertainment Inc., Tokyo 107-0052 (JP); ITO, Takeshi, Sony Computer Entertainment Inc., Tokyo 107-0052 (JP)
(74) Representative: Turner, James Arthur
(86) International application number: PCT/JP2000/000260
(87) International publication number: WO 2000/044137

(56) References cited:
- EP-A- 0 766 431
- WO-A-96/24213
- WO-A-97/40514
- US-A- 5 493 692

## Description

### Technical Field

The present invention relates to an electronic mail advertisement system, an electronic mail terminal and a relay device which use a public network as a communication infrastructure to provide new services in exchanging messages between interconnected terminals.

### Background Art

Portable telephone systems, PHS (Personal Handyphone System), and electronic mail (e-mail) systems are finding growing use as communication means for establishing connections between two stations via a public network, i.e., point-to-point connections.

In order for a user to receive services of such a system, the user usually needs to pay a fixed charge per month and, in addition, an access charge (communication charge) each time they access the system.

Recently, the Internet has been seeing the advent of banner advertisements on WWW (World-Wide Web) pages and electronic mail advertisements using electronic mail magazines. The WWW pages and the electronic mail magazines are drawing much attention as new advertisement mediums on the Internet.

However, because those who see banner advertisements and electronic mail advertisements on electronic mail magazines are limited to personal computer users, the new advertisement mediums fail to be more noticeable to general consumers than conventional advertisement mediums such as direct mail, etc.

A system and method for providing end-user free email described in WO96/24213 sends advertising material to the users of an interconnected email system on the basis of "user specific information" provided to the network about each user. The user specific information can range from information regarding the telephone service the user is operating on, to consumer preferences, to demographic information such as the location from which the user is calling.

Respective aspects and features of the invention are set out in the claims to which attention is drawn.

Embodiments of the present invention seek to provide an electronic mail advertisement system and a relay device which make it possible to attach advertisement data and guide information data to electronic mail that is highly noticeable, and to make the advertisement data and the guide information data highly suitable for the user.

Further embodiments of the present invention seek to provide an electronic mail terminal which is capable of simplifying a request to an advertiser or a guide information provider for the delivery of advertisements or guide information.

According to an embodiment of the present invention, an electronic mail advertisement system has a public network, a sender's terminal for generating, displaying, and sending electronic mail, a receiver's terminal for receiving and displaying electronic mail sent from the sender's terminal, a database, and a relay device connected to the public network, for accessing the database, the sender' s terminal having an attribute data memory for storing attributes of a sender as attribute data, the sender's terminal having means for adding the attribute data to the electronic mail body data to generate electronic mail data when electronic mail is to be sent to the receiver's terminal, the relay device having means for referring to the attribute data added to the electronic mail data sent from the sender's terminal, extracting advertisement data and/or guide information data matching the attributes from the database, adding the extracted advertisement data and/or guide information data to the electronic mail body data, and sending resultant electronic mail data to the receiver's terminal.

With the above arrangement, the sender's terminal adds the attribute data to the electronic mail body data to generate electronic mail data and sends the electronic mail data, and the relay device adds the advertisement data and/or guide information data which matches the attribute data to the electronic mail body data, and sends resultant electronic mail data to the receiver's terminal. Since the sender and the receiver of electronic mail are highly likely to have close attributes such as age, etc., advertisement data and guide information data which are suitable for the receiver can be sent to the receiver.

The receiver's terminal may comprise a pager having a signal reception capability only.

When the relay device sends the advertisement data and/or guide information data to the receiver's terminal, the relay device may also send the advertisement data and/or guide information data to the sender's terminal. Therefore, the sender may receive the advertisement data and/or guide information data which matches the attribute data of the sender. The electronic mail advertisement system can thus increase the effect of advertisement data and/or guide information data.

When the electronic mail data with the sender's attribute data added thereto is sent from the sender's terminal to-the receiver's terminal, the relay device may send the advertisement data and/or guide information data which matches the attribute data to the sender's terminal, and may send only the electronic mail data to the receiver's terminal.

The attributes represented by the attribute data may include at least one of sex, age, residential area, hobby, and occupation. Therefore, the attributes of the sender can be sent in a relatively small amount of data.

The sex and the age may be represented by two-bit information, the sex being represented by one bit assigned to male or female, and the age being represented by one bit assigned to ages under a predetermined age or ages equal to or higher than the predetermined age. The two-bit information may be used to represent four attributes, e.g., male child, male adult, female child, and female adult. Children may be defined as those under 18, and adults may be defined as those equal to or over 18.

The residential area may be replaced with a postal number, so that residential area information may be represented by a relatively small amount of data.

According to an aspect of the present invention, an electronic mail advertisement system has a public network, a sender's terminal for generating, displaying, and sending and receiving electronic mail, a receiver's terminal for generating, displaying, and sending and receiving electronic mail, a database, and a relay device connected to the public network, for accessing the database, each of the sender's terminal and the receiver's terminal having positioning means for producing positioning data, said positioning means comprising a global positioning system providing said positioning data in real time, the relay device having means for searching the database when the positioning data produced by the positioning means is supplied to the relay device, selecting advertisement data and/or guide information data matching the positioning data, and sending the selected advertisement data and/or guide information data to each of the sender's terminal and the receiver's terminal.

Because the terminal with the positioning means sends positioning data to the relay device, the terminal can obtain, on a real-time basis, advertisement data and/or guide information data which matches the positioning data.

The advertisement data sent from the relay device to each of the sender's terminal and the receiver's terminal may comprise banner advertisement data. The banner advertisement data makes it possible to obtain detailed, advertisement information through simple operation of the terminal.

The advertisement data may be associated with inquiry number information of an advertiser added thereto, and a request for detailed data about the advertisement data and/or a request for a material about the advertisement data may be automatically made via the public network to the advertiser in response to operation of each of the terminals with respect to the inquiry number information.

Similarly, the guide information data may be associated with inquiry number information of a guide information provider added thereto, and a request for detailed data about the guide information data and/or a request for a material about the guide information data may be automatically made via the public network to the guide information provider in response to operation of each of the terminals with respect to the inquiry number information.

The public network may have a plurality of base stations, the relay device being disposed in each of the base stations.

According to an embodiment of the present invention, there is also provided an electronic mail terminal for generating, displaying, and sending and receiving electronic mail via a public network, and receiving advertisement data to which inquiry number information of an advertiser is added, comprising a command unit operable with respect to the inquiry number information, for automatically making a request for detailed data about the advertisement data and/or a request for a material about the advertisement data via the public network to the advertiser. The advertisement data may comprise banner advertisement data.

With the above arrangement, an advertiser may be automatically requested to transmit detailed data of a general advertisement and/or to send a material of a general advertisement.

Similarly, a guide information provider may be automatically requested to transmit detailed data of guide information and/or to send a material of guide information.

According to an embodiment of the present invention, the relay device connected to the public network sends the advertisement data and/or guide information data which matches the attribute data added to the electronic mail body data sent from the sender's terminal to the sender's and/or the receiver's terminal. Since the sender and the receiver of electronic mail are highly likely to have close attributes such as age, etc., advertisement data and guide information data which are suitable for the sender and/or receiver can be sent to the sender and/or receiver.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a schematic diagram of an electronic mail advertisement system according to an embodiment of the present invention;
FIG. 2 is a block diagram showing an electric arrangement of an electronic mail terminal used in the electronic mail advertisement system shown in FIG. 1;
FIG. 3 is a front elevational view of the electronic mail terminal;
FIG. 4 is a flowchart of an operation sequence of the electronic mail advertisement system;
FIG. 5 is a view showing a displayed image for entering attributes;
FIG. 6 is a diagram showing attribute data;
FIG. 7 is a view showing a displayed image for mail preparation;
FIG. 8A is a diagram showing details of electronic mail data sent from a sender's terminal
FIG. 8B is a diagram showing details of electronic mail data sent from a relay device;
FIG. 8C is a diagram showing details of electronic mail data received by a receiver's terminal;
FIG. 9 is a schematic diagram showing electronic mail flows between the sender's terminal, the relay device, and the receiver's terminal in the electronic mail advertisement system;
FIG. 10 is a view showing an image displayed on the receiver's terminal;
FIG. 11 is a view showing an image displayed on the sender's terminal;
FIG. 12 is a block diagram showing an electric arrangement of an electronic mail terminal having a positioning device;
FIG. 13 is a flowchart of an operation sequence of a process for automatically downloading detailed data and a process for automatically requesting materials;
FIG. 14 is a view showing an image displayed on a terminal in the process for automatically downloading detailed data;
FIG. 15 is a view showing an image displayed on a terminal in the process for automatically requesting materials; and
FIG. 16 is a schematic diagram of an electronic mail advertisement system according to another embodiment of the present invention.

### Best Mode for Carrying Out the Invention

Like or corresponding parts are denoted by like or corresponding reference characters throughout views.

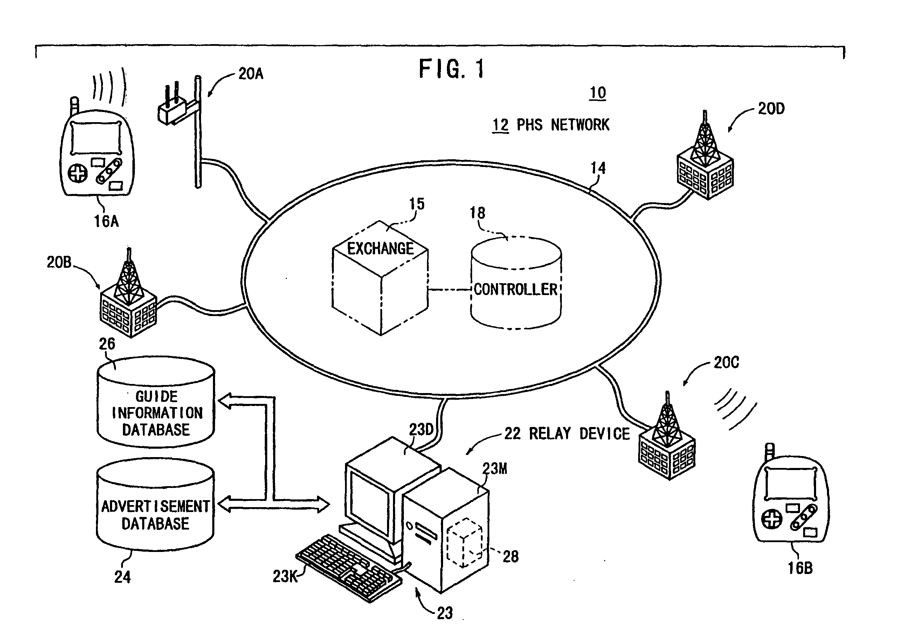

FIG. 1 schematically shows an electronic mail advertisement system 10 according to an embodiment of the present invention.

In FIG. 1, the electronic mail advertisement system 10 uses a public network, i.e., a PHS network 12, as a communication infrastructure. The public network is not limited to the PHS network 12, but may be an analog public circuit network (so-called telephone network), a mobile communication network which uses mobile telephone terminals, an ISDN, a CATV network, or a satellite circuit.

As shown in FIG. 1, the PHS network 12 has a circuit 14, which is schematically illustrated, including an exchange 15 and a controller 18. To the circuit 14, there are connected a plurality of (four in FIG. 1) base stations 20A, 20B, 20C, 20D (also collectively referred to as "20").

In combination with the PHS network 12 composed of the exchange 15, the controller 18, the circuit 14, and the base stations 20, there are used two electronic mail terminals (sender's/receiver's terminals) 16A, 16B (also collectively referred to as "16") which comprise PHS terminals. In FIG. 1, the electronic main terminal 16A serves as a sender's terminal 16A, and the electronic main terminal 16B serves as a receiver's terminal 16B.

Each of the sender's/receiver's terminals 16 comprises a portable information terminal in the form of a PHS terminal, and can be moved around for use by the user. Each of the sender's/receiver's terminals 16 exchange a control signal with a closest base station 20 at all times to indicate its own location to the controller 18. The receiver's terminal 16B may comprise a pager having a signal reception capability only.

A relay device 22 as an access point which comprises a host computer 23 as a control means is connected to the circuit 14 of the PHS network 12. To the relay device 22, there is connected an advertisement database (a collection of advertisement data) 24 as a data storage means that is accessible by the relay device 22. The advertisement database 24 can be updated by the host computer 23 based on the demand from an advertiser or a guidance information provider supplied via the PHS network 12.

The host computer 23 comprises a keyboard 23K as an input means, a computer unit 23M having a memory 28 as a nonvolatile memory means such as a flash memory, a hard disk, or the like, and a display unit 23D.

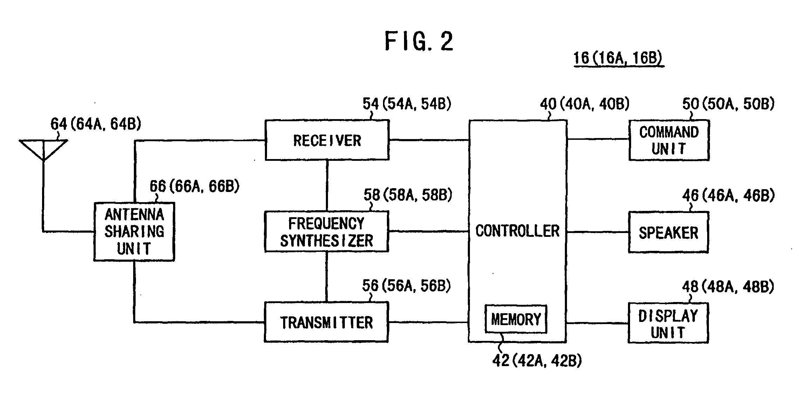

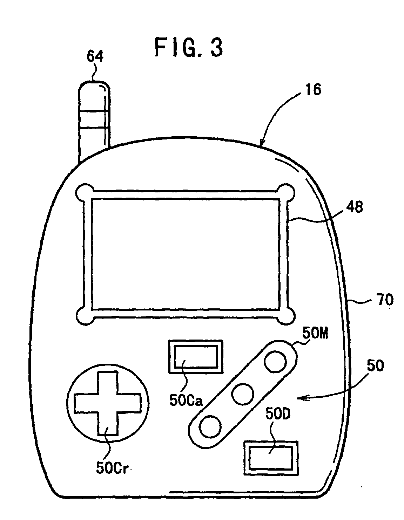

FIG. 2 shows in block form a basic electric arrangement of each of the sender's/receiver's terminals 16 as electronic mail terminals of the electronic mail advertisement system 10. FIG. 3 shows each of the sender's/receiver's terminals 16 in front elevation.

As shown in FIG. 2, the sender's/receiver's terminal 16 has a controller 40 comprising a microcomputer which includes an MPU corresponding to a CPU and a memory 42 as a nonvolatile memory means such as a flash memory.

To the controller 40, there are connected, as human interfaces, a command unit 50 having command switches, a speaker 46, and a display unit 48 comprising a color liquid crystal display unit.

As shown in FIG. 3, the command unit 50 has a cross key 50Cr for selecting characters for the preparation of electronic mail messages, a decision key 50D, a cancel key 50Ca, and a mode changing key 50M. These keys are keys with composite functions, and can function as an on-hook key, an off-hook key, or a power supply key (power supply on/off keys). However, a power supply key should preferably be provided independently. An electronic mail message prepared on the terminal 16 is temporarily stored in the memory 42 shown in FIG. 2.

As shown in FIG. 2, the sender's/receiver's terminal 16 includes a receiver 54, connected to the controller 40, for receiving a radio wave (RF signal) containing electronic mail data from an antenna 64 via an antenna sharing unit 66, converting the RF signal into an intermediate-frequency signal, demodulating the intermediate-frequency signal, and outputting the demodulated signal as received electronic mail data to the controller 40. The controller 40 monitors the receiver 54 for a signal at constant periodic intervals, controls the receiver 54 to receive a signal when an electronic mail message is transmitted, and controls the display unit 48 to display the electronic mail message.

The sender's/receiver's terminal 16 also includes a transmitter 56, connected to the controller 40, for modulating electronic mail data road from the memory 42, changing the modulated electronic mail data from an intermediate-frequency signal to an RF signal, and radiating the RF signal via the antenna sharing unit 66 as a radio wave from the antenna 64.

A frequency synthesizer 58 for outputting a local frequency for a mixer in each of the receiver 54 and the transmitter 56 is also connected to the controller 40.

The sender's/receiver's terminal 16 also has a power supply circuit (not shown) for supplying electric energy to the various circuits therein, and a cell (not shown), e.g., a secondary cell, for supplying electric energy to the power supply circuit.

As shown in FIG. 3, the sender's/receiver's terminal 16 has a casing 70 which is substantially of an elliptical shape with a flat bottom. The casing 70 supports thereon the command unit 50 (the keys 50Ca, 50Cr, 50D and 50M), the display unit 48, and the antenna 64 that is extensible and contractible. Actually, the sender's/receiver's terminal 16 is of a thin, flat configuration and has a size substantially equal to or smaller than a palm of the user's hands, as viewed in front elevation.

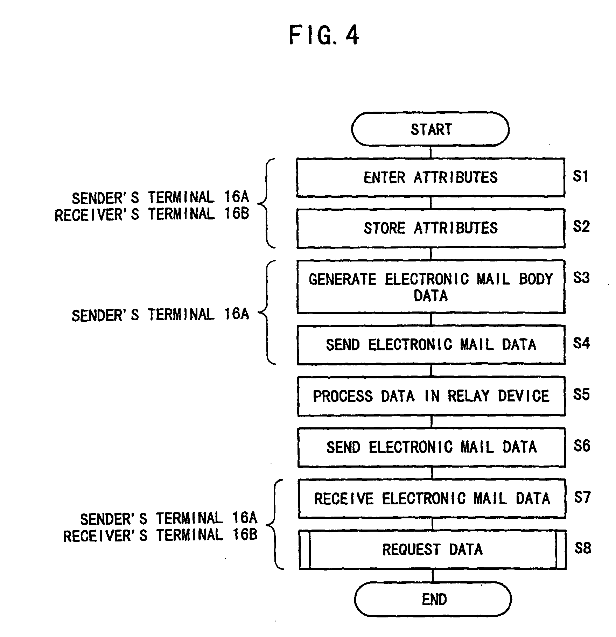

Operation of the electronic mail advertisement system 10, the sender's/receiver's terminal 16 and the relay device 22, which are substantially of the above structure, will be described below with reference to an operation sequence shown in FIG. 4.

In this embodiment, it is assumed that an electronic mail message is to be sent from the sender's/receiver's terminal 16A, which is carried by Taro, the sender, to the sender's/receiver's terminal 16B, which is carried by Hanako, the receiver.

For an easier understanding, the sender'/receiver's terminal 16A will be referred to as a sender's terminal 16A, the sender's/receiver's terminal 16B as a receiver's terminal 16B, the display unit 48 of the sender's terminal 16A as a display unit 48A, and the display unit 48 of the receiver's terminal 16B as a display unit 48B. Similarly, other components of the sender's terminal 16A are denote by their reference numerals with a suffix "A", and other components of the sender's terminal 16B are denoted by their reference numerals with a suffix "B".

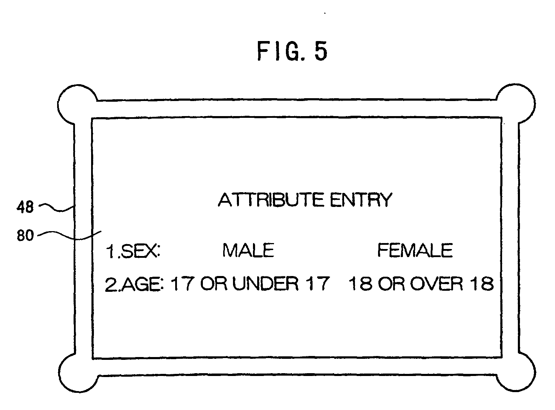

In a preparatory stage, each of the sender and the receiver enters its own attributes into the sender's/receiver's terminal 16 in step S1 shown in FIG. 4. Specifically, when the command unit 50 is operated, an attribute entry image 80 (see FIG. 5) is displayed on the display unit 48. Each of the sender and the receiver enters its age and sex into the attribute entry image 80 using the command unit 50.

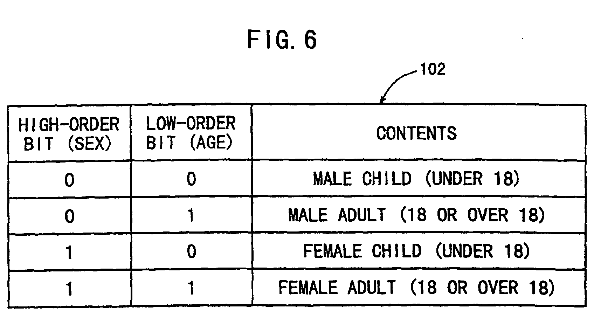

As shown in FIG. 6, sexes and ages are entered as attribute data 102 with two bits including a high-order bit representing a sex and a low-order bit representing an age. Specifically, the bits "0, 0" represent "MALE CHILD UNDER 18", the bits "0, 1" represent "MALE ADULT OF OR OVER 18", the bits "1, 0" represent "FEMALE CHILD UNDER 18", the bits "1, 1" represent "FEMALE ADULT OF OR OVER 18".

In addition to sexes and ages (including specific ages and age ranges), attributes that can be entered may be names, residential areas (typically, addresses), hobbies, occupations, etc. Residential areas may be replaced with postal codes which are represented by a smaller amount of data. If each of the sender's/receiver's terminals 16 stores its own identification number, e.g., a telephone number if it is a PHS terminal, and the identification number is linked to a geographical area, then the residential areas may be such terminal's identification numbers.

However, the two-bit attribute data 102 shown in FIG. 6 is practically sufficient because it can provide four basic attribute ranges.

The entered attribute data 102 is stored in the non-volatile rewritable memory 42 which doubles as an attribute data memory of the sender's/receiver's terminal 16, in step S2.

After the preparatory stage (steps S1, S2) in the sender's terminal 16A and the receiver's terminal 16B, the command unit 50 is operated to generate electronic mail body data 104 in step S3.

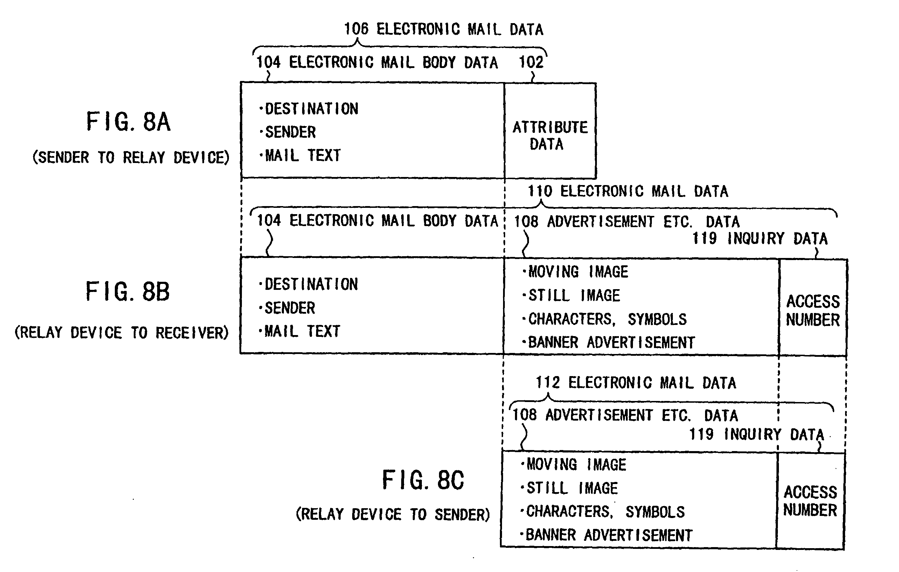

As shown in FIG. 8A, the electronic mail body data 104 includes a destination (an electronic mail address and the receiver's name, Hanako, read from the electronic mail address), a sender (Taro that is automatically attached), and a mail text (e.g., "Tomorrow's meeting spot will be changed to West Exit").

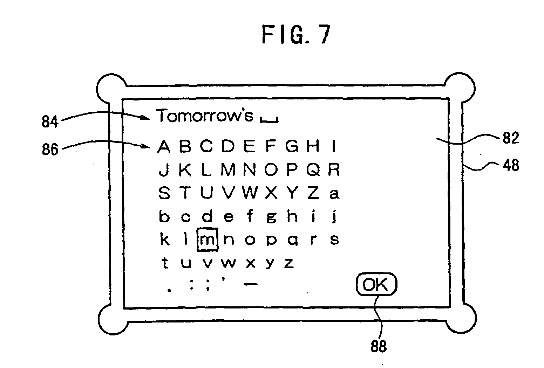

To prepare the mail text, an image 82 for mail preparation is displayed on the screen of the display unit 48A, as shown in FIG. 7. The displayed image 82 includes a mail text display section 84, an alphabetical character display section 86, and an OK (approval) display section 88. The sender operates the cross key 50Cr of the command unit 50 to select a character from the alphabetical character display section 86, and operates the decision key 50D to enter the selected character into the mail text display section 84. To cancel an entered character, the sender operates the cancel key 50Ca. The mode changing key 50M is used to switch between a mode to enter the alphabetical characters and a mode to enter numerals and special symbols.

Thereafter, the sender selects the OK display section 88 with the cross key 50Cr and decides on the OK display section 88 with the decision key 50D for thereby entering a key command for sending the mail text. The electronic mail data 106 which is stored in the memory 42 is now sent from the transmitter 56 via the antenna sharing unit 66 to the antenna 64, from which it is radiated as a radio wave, in step S4.

Since the sender's/receiver's terminals 16 are designed to send and receive electronic mail via the relay device 22, an identification number representing the address of the host computer 23 of the relay device 22 is automatically inserted into a header (not shown) of the electronic mail data 106.

When the electronic mail data 106 is sent to the circuit 14, the exchange 15 refers to the header of the electronic mail data 106, and sends the electronic mail data 106 to the host computer 23 of the relay device 22.

FIGS. 8A, 8B, and 8C show an example of electronic mail data transmitted through the PHS network 12.

As described above, FIG. 8A schematically shows the electronic mail data 106 which is sent from the sender's terminal 16A via the base station 20A to the circuit 14 of the PHS network 12. It is assumed that data depending on the communication infrastructure, such as a physical address and communication negotiations, inserted in the header are omitted for the sake of brevity. The electronic mail data 106 sent from the sender's terminal 16A, i.e., the sender, to the relay device 22 is composed of the electronic mail body data 104 including the destination (receiver), the sender, and the mail text, and the attribute data 102 added to the electronic mail body data 104. Details of data shown in FIGS. 8B and 8C will be described later on.

The relay device 22 performs a predetermined processing operation in step S5.

Specifically, the host computer 23 of the relay device 22 refers to the attribute data 102 contained in the electronic mail data 106 from the sender's terminal 16A, accesses the advertisement database 24 and/or the guide information database 26, and extracts advertisement data and/or guide information data which matches the attributes provided by the advertiser or the guide information provider, from the advertisement database 24 and/or the guide information database 26.

The host computer 23 then adds extracted advertisement data and/or guide information data 108 (hereinafter also referred to as "advertisement etc. data", see FIG. 8B) and inquiry data 119 which comprises an access number such as a telephone number, a home page address, etc. that represents inquiry number information of the advertiser or the guide information provider, to the electronic mail data 106 (more exactly, the electronic mail body data 104), thus generating new electronic mail data (also referred to as "combined electronic mail data") 110. The host computer 23 sends the new electronic mail data 110 to the circuit 14 for transmission to the receiver's terminal 16B.

As shown in FIG. 8B, the advertisement etc. data 108 may be arranged to contain a moving image, a still image, characters, symbols, and/or a banner advertisement.

The inquiry data 119 serves to make it possible to automatically request a material such as detailed merchandise information or guide information of the advertisement etc. data 108 which includes the advertisement data and the guide information data. The inquiry data 119 comprises data of a telephone number or the like accessible via the communication infrastructure, i.e., the PHS network 12 in this embodiment.

In the electronic mail data 106, 110 shown in FIGS. 8A and 8B, the mail text of the electronic mail body data 104 should preferably be encrypted so that it cannot be read by the relay device 22. It is also preferable that the attribute data 102 be also encrypted so that it can be read by only the relay device 22.

The relay device 22 also generates, in addition to the electronic mail data 110 shown in FIG. 8B, electronic mail data 112 including the advertisement data 108 and the inquiry data 119 only and having the sender's terminal 16A as its destination, as shown in FIG. 8C. The electronic mail data 112 may also contain the electronic mail body data 104 in addition to the advertisement data 108 and the inquiry data 119.

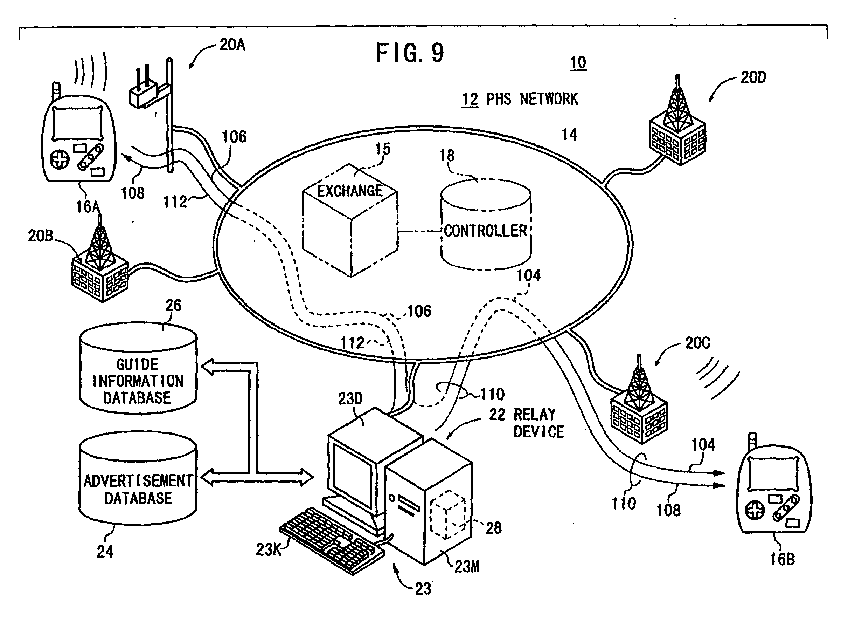

In step S6, the relay device 22 sends the electronic mail data. Specifically, as shown in FIG. 9, when the relay device 22 sends the combined electronic mail data 110 including the advertisement data 108 to the circuit 14, the exchange 15 refers to the controller 18, confirms the location of the receiver's terminal 16B, and sends the electronic mail data 110, which comprises the electronic mail body data 104, the advertisement data 108, and the inquiry data 119, as a radio wave via the base station 20C to the receiver's terminal 16B.

At the same time, the relay device 22 sends the electronic mail data 112 including the advertisement data 108 via the circuit 14 as a radio wave from the base station 20A to the sender's terminal 16A.

After having sent these electronic mail data, the relay device 22 is disconnected from the circuit 14.

Although not shown for the sake of brevity, the electronic mail data are actually sent via mail servers to the sender's/receiver's terminals 16A, 16B.

In step S7, the combined electronic mail data 110 is received by the antenna 64B of the receiver's terminal 16B, and supplied via the antenna sharing unit 66B and the receiver 54B to the controller 40B in which the combined electronic mail. data 110 is stored in the memory 42B. The controller 40B controls the speaker 46B to announce the reception of the combined electronic mail data 110, and also controls the display unit 48B to display information represented by the combined electronic mail data 110.

The electronic mail data 112 is received by the antenna 64A of the sender's terminal 16A, and supplied via the antenna sharing unit 66A and the receiver 54A to the controller 40A in which the electronic mail data 112 is stored in the memory 42A. The controller 40A controls the speaker 46A to announce the reception of the electronic mail data 112, and also controls the display unit 48A to display information represented by the electronic mail data 112.

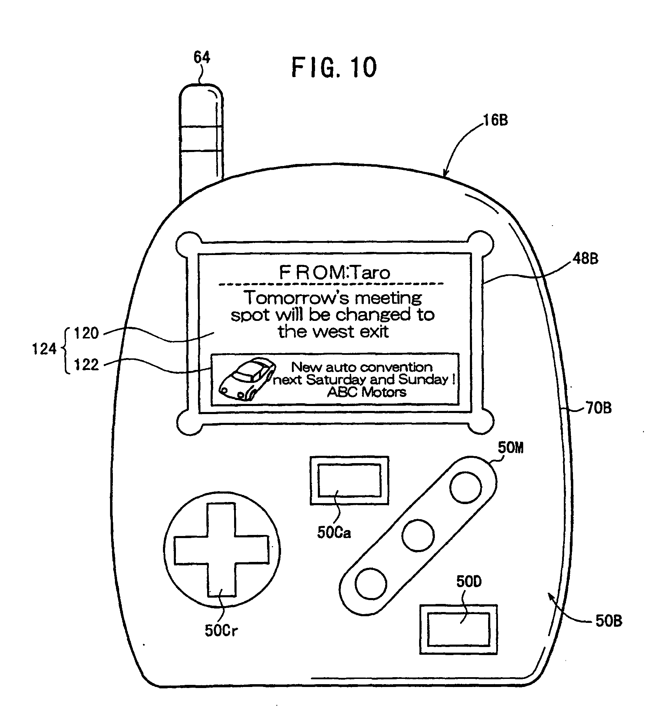

Specific examples of displayed images will be described below. As shown in FIG. 10, the display unit 48B of the receiver's terminal 16B displays an image 124 including a message 120 "FROM: Taro Tomorrow's meeting spot will be changed to the west exit" corresponding to the electronic mail body data 104, an advertisement etc. message 122 "New auto convention next Saturday and Sunday 1 ABC Motors" together with an automobile icon corresponding to the advertisement data 108.

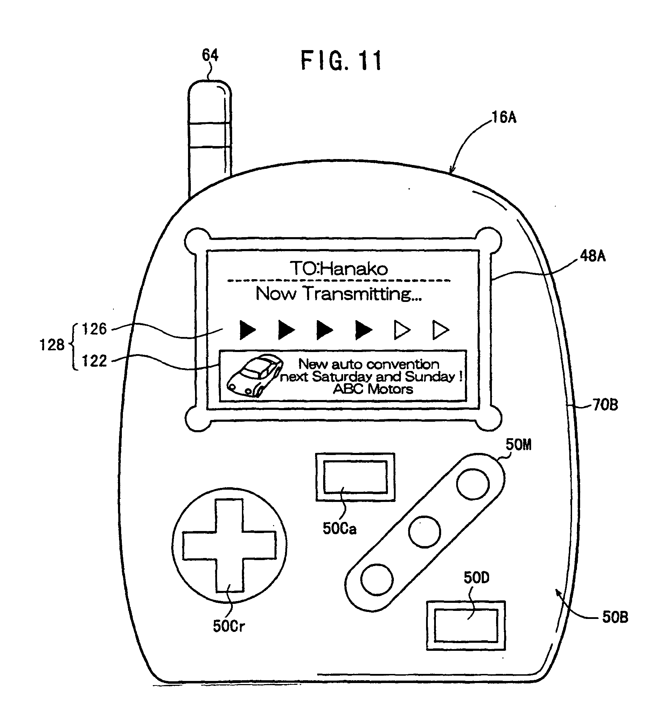

As shown in FIG. 11, the display unit 48A of the sender's terminal 16A displays an image 128 including a message 126 "TO: Hanako Now Transmitting ···" corresponding to the header (not shown), together with a transmission progress rate indicator in the form of a plurality of (six in FIG. 10) uniformly directed triangular marks, four of which are highlighted to indicate a transmission progress rate of 4/6, and the advertisement etc. message 122 together with an automobile icon corresponding to the advertisement data 108.

From the displayed images 124, 148 shown in FIGS. 10 and 11, the sender and the receiver can understand the contents of the electronic mail and also see the advertisement message 122 displayed in combination with the electronic mail that is highly noticeable. Inasmuch as the advertisement etc. message 122 is made suitable for attributes of the sender, the sender and the receiver, which is considered to have attributes similar to those of the sender, are highly likely to be interested in the advertisement etc. message 122.

If the advertisement message 122 is displayed based on banner advertisement data, then the sender or the receiver can operate the command unit 50 (50A, 50B) for a mouse click to access the home page of the advertiser, which is linked to the advertisement message 122, via the circuit 14, and can download detailed data of the home page, in step S8. Therefore, the user of the sender's/receiver's terminal 16 can obtain detailed information of the advertisement message 122.

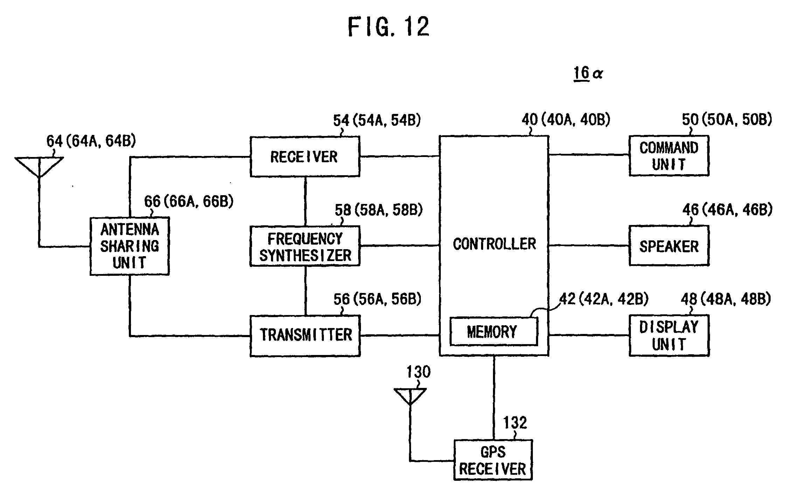

FIG. 12 shows in block form an electric arrangement of an electronic mail terminal 16α according to another embodiment of the present invention. The electronic mail terminal 16α is similar to the electronic mail terminal 16 shown in FIG. 2, except that a GPS receiver 132 as a positioning system for identifying its global position is connected to the controller 40. As well known in the art, the GPS receiver 132 receives radio waves from three or more GPS satellites via an antenna 130, and solves known navigational equations based on the positions of the GPS satellites for the global position (represented by a latitude and a longitude) of the GPS receiver 132.

The position identified by the GPS receiver 132 is inserted, on a real-time basis, into the attribute data 102 shown in FIG. 8A, so that an advertisement or guide information closely related to the location where the sender is positioned at the time an electronic mail message is sent from the sender can be sent, on a real-time basis, from the relay device 22 to the receiver and the sender.

Specifically, a new service can be created for the sender who carries the terminal 16A and is positioned near a station A and the receiver who carries the terminal 16B and is going to the station A to meet the sender, to obtain, on a real-time basis, information near the station A such as for a bargain sale, or latest information such as for a limited-time discount sale or an event advertisement near the station A, together with electronic mail.

In this embodiment, the electronic mail advertisement system uses the PHS network with PHS terminals as the communication infrastructure. Therefore, even if the GPS receiver 132 is not employed, the position of the sender can be recognized in a certain geographical range using the positional data of the terminals 16 which is stored in the controller 18 of the PHS network 12. Consequently, the above new service can be provided even in the absence of the GPS receiver 132.

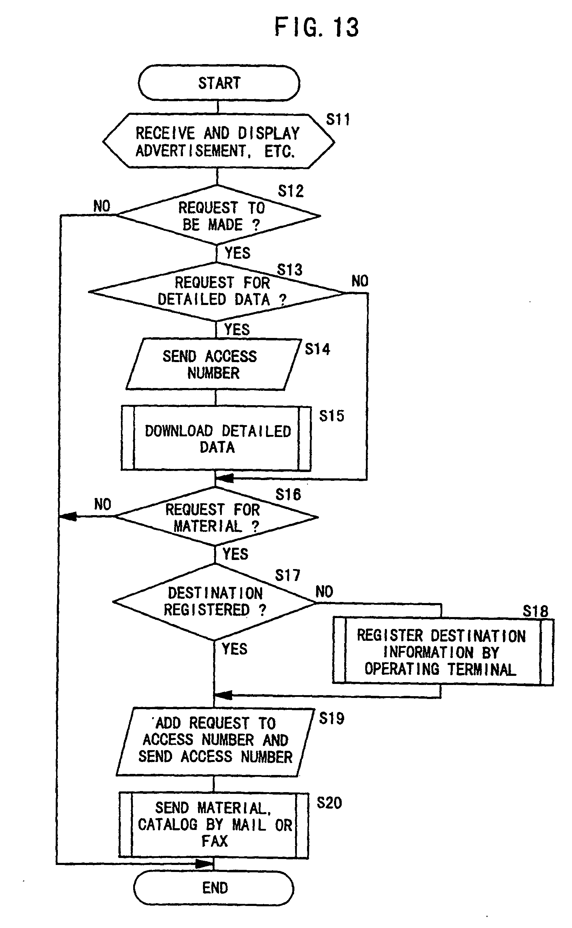

In relation to the requesting process of step S8 shown in FIG. 4, the sender or the receiver may be interested in the advertisement etc. message 122 displayed on its terminal 16, and may want to ask the advertiser or the guide information provider for detailed data or detailed materials or catalogs to be delivered or faxed. Such a process will be described below with reference to FIG. 13.

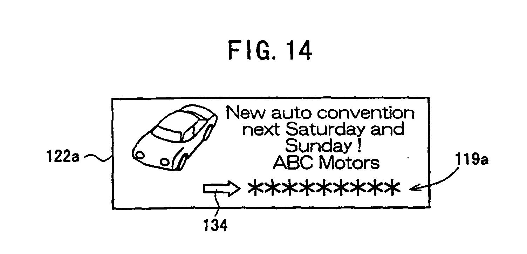

In a preparatory stage, when the advertisement etc. message 122 is displayed on the display unit 48 of the terminal 16, an access number 119a (indicated "*********" in FIG. 14) added to the electronic mail data 110 or the electronic mail data 112 as the inquiry data 119 representing inquiry number information is displayed in the advertisement etc. message 122 (denoted by 122a in FIG. 14) in step S11.

In step S12, the user of the terminal 16 operates the command unit 50 if the user wants to download detailed data of the advertisement etc. message 122a (request for detailed data) or wants to have a material of the advertisement etc. message 122a (request for a material).

If the user has made a request in step S12, then the user decides whether to make a request for detailed data by moving a cursor 134 shown in FIG. 14 to the access number 119a in the advertisement etc. message 122a and clicking on the cursor 134 to enter a command in step S13.

If the user has made a request for detailed data in step S13, then the controller 40 of the terminal 16 automatically sends the access number 119a to the circuit 14 in response to the entered command in step S14.

The advertiser or the guide information provider who receives the access number 119a via the PHS network 12 sends requested detailed data via the PHS network 12 to the terminal 16 which has sent the access number 119a. In step S15, the detailed data is downloaded into the memory 42 of the controller 40, and will be displayed on the display unit 48 according to a display procedure contained in the detailed data.

If the user has not made a request for detailed data in step S13, or after has downloaded the detailed data in step S15, then the user decides, with the command unit 50, whether to make a request for a material to be mailed or faxed in step S16.

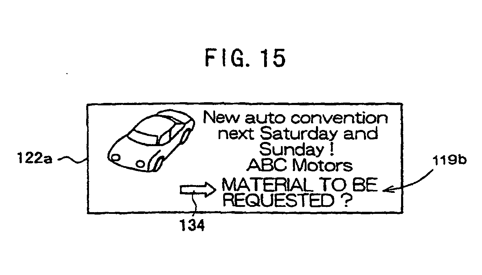

Specifically, as shown in FIG. 15, the user clicks on the cursor 134 positioned at a message 119b "Material to be requested ?" in an advertisement etc. message 122b. In step S17, it is determined whether a destination such as an address (including a facsimile number, etc.) of the user is registered in the memory 42 or not. If not registered, then the display unit 48B displays a destination registration image. The user operates the command unit 50 to enter destination information representing an address, a facsimile number, etc. in step S18.

In step S19, the controller 40 automatically adds the content of the request to the access number contained in the inquiry data 119, and sends the access number with the added request to the circuit 14.

In step S20, the advertiser or the guide information provider who has received the access number via the PHS network 12 sends a material, a catalog, etc. corresponding to the content of the request by mail or fax to the user of the terminal 16 which has sent the request. Thereafter, the process shown in FIG. 13 comes to an end.

If no request is made in step S12 or no request for a material is made in step S16, then the process shown in FIG. 13 also comes to an end.

In the electronic mail advertisement system 10 shown in FIG. 1, one relay device 22 is connected to the circuit 14. However, a plurality of relay devices 22 may be connected to the circuit 14. If a plurality of relay devices 22 are connected to the circuit 14, then the sender's/receiver's terminals 16 use the closest ones of the relay devices 22.

In the electronic mail advertisement system 10 shown in FIG. 1, furthermore, the relay device 22 is connected as a new communication infrastructure to the circuit 14. However, the relay device 22 may be integrally combined with or additionally connected to each of the base stations 20 or a certain one of the base stations 20 or the exchange 15 or the controller 18 that is part of the existing communication infrastructure, which is the PHS network 12 in the embodiment shown in FIG. 1. If the existing communication infrastructure comprises a mobile communication network of mobile telephone terminals, then the relay device 22 may also be integrally combined with or additionally connected to each or a certain one of the base stations or a mobile communication exchange.

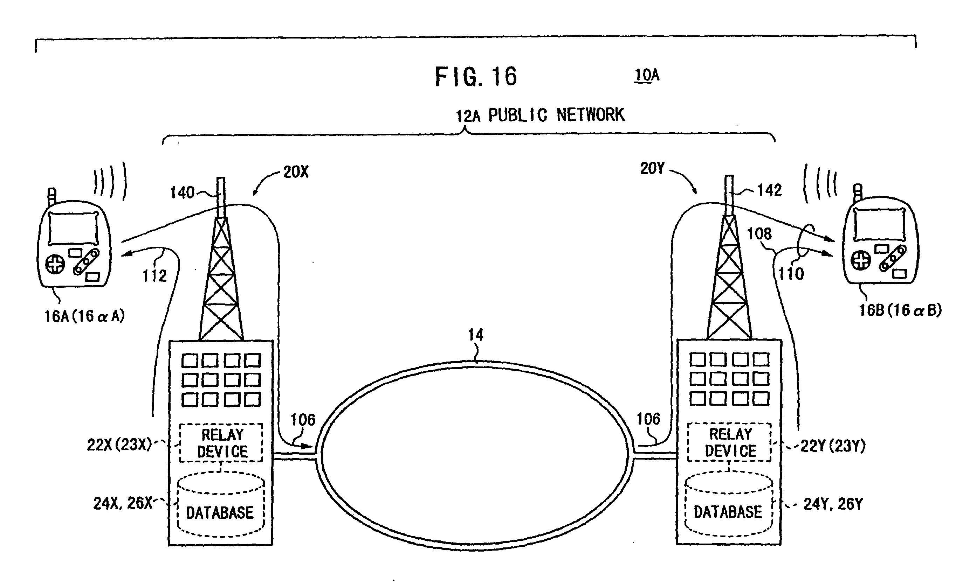

FIG. 16 schematically shows an electronic mail advertisement system 10A according to another embodiment of the present invention. In FIG. 16, the electronic mail advertisement system 10A uses a public network 12A such as a PHS network or a mobile communication network of mobile telephone terminals, which includes a circuit 14 and base stations 20X, 20Y connected thereto. The base stations 20X, 20Y incorporate integrally therein respective relay devices 22X, 22Y including respective host computers 23X, 23Y connected to respective databases 24X, 26X, and 24Y, 26Y.

The electronic mail advertisement system 10A operates as follows: When electronic mail data 106 (see FIG. 8A) comprising electronic mail body data 104 and attribute data 102 is sent as a radio wave from the sender's terminal 16A (or the sender's terminal 16oLA with the positioning function (see FIG. 12)), the base station 20X receives the electronic mail data 106 via an antenna 140, and the relay device 22X of the base station 20X accesses the databases 24X, 26X, and sends electronic mail data 112 comprising advertisement data 108 corresponding to the attribute data 102 and inquiry data 119 via the antenna 140 to the sender's terminal 16A.

The electronic mail data 106 received by the base station 20X is sent via the circuit 14 of the public network 12A to the base station 20Y. The base station 20Y refers to the attribute data 102 in the electronic mail data 106, accesses the databases 24Y, 26Y, extracts advertisement etc. data 108 corresponding to the attribute data 102 and inquiry data 119, and sends electronic mail data 110 (see FIG. 8B) comprising the electronic mail body data 104 and the advertisement etc. data 108 and the inquiry data 119 added thereto as a radio wave via an antenna 142 to the receiver's terminal 16B.

With the electronic mail advertisement system 10A shown in FIG. 16, the electronic mail data 110 including the advertisement etc. data 108 does not pass through the circuit 14, but the electronic mail data 106 including only the attribute data 102 passes through the circuit 14. Accordingly, no undue burden is likely to be imposed on the circuit 14.

In the embodiments of the present invention, since an advertisement and guide information which match attributes of the sender are added, and resultant electronic mail data 112 is sent to the sender, there is provided a highly selective advertisement medium for the advertiser and the guide information provider.

Generally, electronic mail messages are exchanged between people whose attributes are relatively close to each other. Therefore, when the electronic mail data 110 is also sent to the receiver, the advertisement can be sent to a certain group of selected people.

Using positioning information, it is possible to add effective real-time information, which differs from residential area information, to electronic mail data. Thus, the user can obtain latest information at the present location, for example, on a real-time basis.

Inasmuch as advertisement etc. data is added to highly noticeable electronic mail data, there is provided an advertisement medium which has a high advertisement effect (efficiency).

With the high advertisement effect, the advertisement medium is made highly economic, with the result that each user can expect the fixed charge per month and the access charge (communication charge) to be lowered or eliminated. Consequently, the user finds the electronic mail advertisement system highly convenient and advantageous in cost.

After having received advertisement etc. data 108 in relation to electronic mail, the user can obtain additional information by downloading detailed data or receiving a material or a catalog based on operation of the command unit 50. As a consequence, the electronic mail advertisement system is highly useful for providing a seamless stream of commercial activities up to the sale of merchandise.

Because the terminals 16 (16A, 16B), 16α (16αA, 16αB) exchange data with the public network 12A such as the PHS network 12 via radio waves, i.e., in a wireless fashion, the terminals 16, 16α are excellent in portability.

According to the present invention, as described above, since advertisement data and/or guide information data depending on attributes of users can automatically be added to electronic mail data, the advertisement data and/or the guide information data is rendered highly suitable for the users.

Inasmuch as electronic mail data is highly noticeable, an advertisement added to the electronic mail data is highly likely to be viewed and used by users.

In addition, since users can automatically request an advertiser or a guide information provider to send additional information about an advertisement or guide information by downloading detailed data or mailing or faxing a material, based on operation of the command unit, the process of requesting such additional information is highly simplified.

Although certain preferred embodiments of the present invention have been shown and described in detail, it should be understood that various changes and modifications may be made therein without departing from the scope of the appended claims.

## Claims

1. An electronic mail advertisement system comprising:
a public network (12) (14);
a sender's terminal (16) for generating, displaying, and sending and receiving electronic mail;
a receiver's terminal (16) for generating, displaying, and sending and receiving electronic mail;
a database (24) (26); and
a relay device (22) connected to said public network, for accessing said database;
each of said sender's terminal and said receiver's terminal having positioning means (132) for producing positioning data, said positioning means comprising a global positioning system providing said positioning data in real time;
said relay device having means for searching said database when the positioning data produced by said positioning means is supplied to said relay device, selecting advertisement data and/or guide information data matching said positioning data, and sending the selected advertisement data and/or guide information data to each of said sender' s terminal and said receiver's terminal.

2. A system according to claim 1, wherein
said sender's terminal has an attribute data memory (42) for storing attributes of a sender as attribute data (102), said sender's terminal has means for adding said attribute data (102) to electronic mail body data (104) to generate electronic mail data (106) when electronic mail is to be sent to said receiver's terminal; and wherein
said relay device has means for referring to the attribute data added to the electronic mail data sent from said sender's terminal, extracting advertisement data and/or guide information data (108) matching said attributes from said database, adding the extracted advertisement data and/or guide information data to said electronic mail body data (104), and sending resultant electronic mail data to said receiver's terminal.

3. An electronic mail advertisement system according to claim 2, wherein said sender's terminal has means for receiving data, said relay device comprising means for sending the extracted advertisement data and/or guide information data (112), together with or separately from said electronic main data, to said sender's terminal while said sender's terminal is being connected to said public network for sending the electronic mail, when the electronic mail data with the extracted advertisement data and/or guide information data added thereto is sent to said receiver's terminal.

4. An electronic mail advertisement system according to claims 2 or 3, wherein the attributes represented by said attribute data (102) include at least one of sex, age, residential area, hobby, and occupation.

5. An electronic mail advertisement system according to claim 4, wherein said sex and said age are represented by two-bit information, said sex being represented by one bit assigned to male or female, and said age being represented by one bit assigned to ages under a predetermined age or ages equal to or higher than said predetermined age.

6. An electronic mail advertisement system according to claim 4, wherein said residential area is replaced with a postal number.

7. An electronic mail advertisement system according to any one of claims 1 to 6, wherein the advertisement data sent from said relay device to each of said sender's terminal and said receiver's terminal comprises banner advertisement data.

8. An electronic mail advertisement system according to any one of claims 1 to 7, wherein said advertisement data is associated with inquiry number information (119) of an advertiser added thereto, and a request for detailed data about the advertisement data and/or a request for a material about the advertisement data is automatically made via said public network to said advertiser in response to operation of each of said terminals with respect to said inquiry number information.

9. An electronic mail advertisement system according to any one of claims 1 to 6, wherein said guide information data is associated with inquiry number information (119) of a guide information provider added thereto, and a request for detailed data about the guide information data and/or a request for a material about the guide information data is automatically made via said public network to said guide information provider in response to operation of each of said terminals with respect to said inquiry number information.

10. An electronic mail advertisement system according to claim 2, wherein said public network (12A) has a plurality of base stations (20X), (20Y), said relay device (22) being disposed in each of said base stations (20X), (20Y);
said base station (20X) which handles said sender's terminal (16A) having means for sending electronic mail data (106) sent from said sender's terminal with the attribute data (102) added thereto, via said public network to the base station which handles said receiver's terminal;
said relay device (22Y) of the base station (20Y) which handles said receiver's terminal (16B) having means for referring to the attribute data (102) added to said electronic mail data (106), extracting advertisement data and/or guide information data matching said attribute data from said database (24Y), (26Y), adding the extracted advertisement data and/or guide information data to said electronic mail data, and sending resultant electronic mail data (110) from said base station which handles said receiver's terminal to said receiver's terminal.

11. An electronic mail terminal (16) for generating, displaying, and sending and receiving electronic mail via a public network (12), and receiving advertisement data and/or guide information data (108); said terminal having:
positioning means (132) for producing positioning data, said positioning means (132) comprising a global positioning system arranged to provide said positioning data in real time; and a relay device (22) arranged to receive said positioning data, to select from a database (24), (26) advertisement data and/or. guide information data matching said positioning data and to send the selected advertisement data and/or guide information data to said electronic mail terminal (16).

12. An electronic mail terminal (16) according to claim 11, wherein said received advertisement data and/or guide information data further comprises inquiry number information of an advertiser and/or guide information provider; said terminal (16) further comprising:
a command unit (50) operable with respect to said inquiry number information, for automatically making a request for detailed data about the advertisement data and/or guide information data and/or a request for a material about the advertisement data and/or guide information data via said public network to said advertiser and/or guide information provider.

13. An electronic mail terminal according to claim 12, wherein said advertisement data comprises banner advertisement data.

14. A relay device (22) connected to a public network (12), (14), for accessing a database (24), (26), said relay device being arranged to receive real-time global positioning system positioning data from an electronic mail terminal (16), said relay device (22) comprising:
means for searching said database (24), (26) for advertisement data and/or guide information data matching said positioning data;
means for sending the selected advertisement data and/or guide information data to said mail terminal (16).

## Patentansprüche

1. Elektronisches Post-Werbesystem, welches aufweist:
ein öffentliches Netzwerk (12, 14);
ein Senderendgerät (16) zum Erzeugen, Anzeigen und Senden und Empfangen elektronischer Post;
ein Empfängerendgerät (16) zum Erzeugen, zum Anzeigen und zum Senden und Empfangen elektronischer Post;
eine Datenbank (24, 26); und
eine Weitergabeeinrichtung (22), welche mit dem öffentlichen Netzwerk verbunden ist, um auf die Datenbank zuzugreifen;
wobei jedes Senderendgerät und Empfangsgerät eine Positionierungseinrichtung (132) aufweist, um Positionierungsdaten zu erzeugen, wobei die Positionierungseinrichtung ein globales Positionierungssystem aufweist, welches die Positionierungsdaten in Realzeit bereitstellt;
wobei die Weitergabeeinrichtung eine Einrichtung aufweist, um die Datenbank zu suchen, wenn die Positionierungsdaten, welche durch die Positionierungseinrichtung erzeugt werden, zur Weitergabeeinrichtung geliefert werden, um die Werbedaten und/oder die Führungsinformationsdaten, die zu den Positionierungsdaten passen, auszuwählen und um die ausgewählten Werbedaten und/oder Führungsinformationsdaten zum Senderendgerät und zum Empfängerendgerät zu liefern.

2. System nach Anspruch 1, wobei
das Senderendgerät einen Merkmalsdatenspeicher (22) hat, um Merkmale eines Senders als Werbedaten (102) zu speichern, das Senderendgerät eine Einrichtung hat, um die Werbedaten (102) elektronischen Postgrunddaten (104) hinzuzufügen, um elektronische Postdaten (106) zu erzeugen, wenn die elektronische Post zum Empfängerendgerät gesendet werden soll; und wobei
die Weitergabeeinrichtung eine Einrichtung aufweist, um auf die Merkmalsdaten bezug zunehmen, welche den elektronischen Postdaten hinzugefügt wurden, welche vom Senderendgerät geliefert werden, um Werbedaten und/oder Führungsinformationsdaten (108) zu extrahieren, welche mit den Merkmalen von der Datenbank übereinstimmen, um die extrahierten Merkmalsdaten und/oder die Führungsinformationsdaten den elektronischen Postgrunddaten (104) hinzuzufügen und um die resultierenden elektronischen Postdaten zum Empfängerendgerät zu liefern.

3. Elektronisches Post-Werbesystem nach Anspruch 2, wobei das Senderendgerät eine Einrichtung aufweist, um Daten zu empfangen, die Weitergabeeinrichtung eine Einrichtung aufweist, um die extrahierten Werbedaten und/oder Führungsinformationsdaten (112) zusammen mit oder separat von den elektronischen Hauptdaten zum Senderendgerät zu liefern, während das Senderendgerät mit dem öffentlichen Netzwerk verbunden ist, um die elektronische Post, wenn den elektronischen Postdaten die extrahierten Werbedaten und/oder Führungsinformationsdaten hinzugefügt wurden, zum Empfängerendgerät zu liefern.

4. Elektronisches Post-Werbesystem nach Anspruch 1 oder 2, wobei die Merkmale, welche durch die Merkmalsdaten (102) dargestellt werden, zumindest eines vom Geschlecht, von der Altersstufe, von der Wohngegend, vom Hobby und von der Beschäftigung zeigen.

5. Elektronisches Post-Werbesystem nach Anspruch 4, wobei das Geschlecht und das Alter durch Zwei-Bit-Information dargestellt werden, wobei das Geschlecht durch Ein-Bit dargestellt wird, welches männlichem oder weiblichem Geschlecht zugeteilt ist, und die Altersstufe durch ein Bit dargestellt wird, welches Alterstufen unter einer vorher festgelegten Altersstufe oder Altersstufen gleich oder höher als die vorher festgelegte Altersstufe zugeteilt ist.

6. Elektronisches Post-Werbesystem nach Anspruch 4, wobei der Wohngegend durch eine Postleitzahl ersetzt ist.

7. Elektronisches Post-Werbesystem nach einem der Ansprüche 1 bis 6, wobei die Werbedaten, welche von der Weitergabeeinrichtung zu dem Senderendgerät und zum Empfängerendgerät geliefert werden, Schlagzeilenwerbedaten umfassen.

8. Elektronisches Post-Werbesystem nach einem der Ansprüche 1 bis 7, wobei die Werbedaten mit einer Erfragungsnummerninformation (119) eines Werbers, die diesen hinzugefügt ist, verknüpft sind, und eine Nachfrage nach detaillierten Daten über die Werbedaten und/oder eine Nachfrage nach einem Material über die Werbedaten automatisch über das öffentliche Netzwerk zum Werber als Antwort auf den Betrieb jedes der Endgeräte in bezug auf die Erfragungsnummerinformation getätigt wird.

9. Elektronisches Post-Werbesystem nach einem der Ansprüche 1 bis 6, wobei die Führungsinformationsdaten mit der Erfragungsnummerninformation (119) des Führungsinformationsbereitstellers, die diesen hinzugefügt ist, verknüpft ist, und eine Anfrage nach detaillierten Daten über die Führungsinformationsdaten und/oder eine Nachfrage nach einem Material über die Führungsinformationsdaten automatisch über das öffentliche Netzwerk zum Führungsinformationsbereitsteller als Antwort auf den Betrieb jedes der Endgeräte in bezug auf die Erfragungsnummerinformation getätigt wird.

10. Elektronisches Post-Werbesystem nach Anspruch 2, wobei das öffentliche Netzwerk (12A) mehrere Basisstationen (20X, 20Y) aufweist, wobei die Weitergabeeinrichtung (22) in jeder der Basisstationen (20X), (20Y) angeordnet ist;
wobei die Basisstation (20X), welche das Senderendgerät (16A) handhabt, eine Einrichtung aufweist, um elektronische Postdaten (106), welche vom Senderendgerät mit hinzugefügten Merkmalsdaten (102) geliefert werden, über das öffentliche Netzwerk zur Basisstation, welche das Empfangserendgerät handhabt, zu liefern;
wobei die Weitergabeeinrichtung (22Y) der Basisstation (20Y), welche das Empfangendgerät (16B) handhabt, eine Einrichtung hat, um auf die Merkmalsdaten (102), die den elektronischen Postdaten (106) hinzugefügt werden, bezugzunehmen, um die Werbedaten und/oder Führungsinformationsdaten, welche mit den Attributdaten von der Datenbank (24Y), (26X) übereinstimmen, zu extrahieren, um die extrahierten Werbedaten und/oder Führungsdaten den elektronischen Postdaten hinzuzufügen, und um die resultierenden elektronischen Postdaten (110) von der Basisstation, welche das Empfängerendgerät handhabt, zum Empfängerendgerät zu liefern.

11. Elektronisches Postendgerät (16), um elektronische Post über ein öffentliches Netzwerk (12) zu erzeugen, anzuzeigen und zu liefern, und um Werbedaten und/oder Führungsinformationsdaten (108) zu empfangen; wobei das Endgerät aufweist:
eine Positionierungseinrichtung (1032), um Positionierungsdaten zu erzeugen, wobei die Positionierungseinrichtung (132) ein globales Positionierungssystem aufweist, welches eingerichtet ist, die Positionierungsdaten in Realzeit bereitzustellen; und eine Weitergabeeinrichtung (22), die eingerichtet ist, die Positionierungsdaten zu empfangen, Werbedaten und/oder Führungsinformationsdaten, welche mit den Positionierungsdaten übereinstimmen, von einer Datenbank (24, 26) auszuwählen und die ausgewählten Werbedaten und/oder Führungsinformationsdaten zum elektronischen Postendgerät (16) zu liefern.

12. Elektronisches Postendgerät (16) nach Anspruch 11, wobei die empfangenen Werbedaten und/oder Führungsinformationsdaten außerdem Erfragungsnummerinformation eines Werbers und/oder Führungsinformationsbereitstellers aufweisen; wobei das Endgerät (16) außerdem aufweist:
eine Befehlseinheit (50), welche in bezug auf die Erfragungsnummerinformation betreibbar ist, um automatisch eine Anfrage nach detaillierten Daten über die Werbungsdaten und/oder Führungsinformationsdaten und/oder eine Anfrage nach einem material über die Werbedaten und/oder Führungsinformationsdaten über das öffentliche Netzwerk zum Werber und/oder zum Führungsinformationsbereitsteller zu machen.

13. Elektronisches Postendgerät (16) nach Anspruch 12, wobei die Werbedaten Schlagzeilenwerbedaten aufweisen.

14. Weitergabeeinrichtung (22), welche mit einem öffentlichen Netzwerk (12, 14) verbunden ist, um auf eine Datenbank (24, 26) zu zugreifen, wobei die Weitergabeeinrichtung eingerichtet ist, realzeit-globale Positionierungssystem-Positionierungsdaten von einem elektronischen Postendgerät (16) zu empfangen, und die Weitergabeeinrichtung (22) aufweist:
eine Einrichtung, um die Datenbank (24, 26) nach Werbedaten und/oder Führungsinformationsdaten, die mit den Positionierungsdaten übereinstimmen, zu suchen;
eine Einrichtung, um die ausgewählten Werbedaten und/oder Führungsinformationsdaten zum Postendgerät (16) zu liefern.

## Revendications

1. Système de publicité par courrier électronique comprenant :
un réseau public (12), (14) ;
un terminal d'émetteur (16) pour générer, afficher, et envoyer et recevoir du courrier électronique ;
un terminal de récepteur (16) pour générer, afficher, et envoyer et recevoir du courrier électronique ;
une base de données (24), (26) ; et
un dispositif de relais (22) connecté au dit réseau public, pour accéder à ladite base de données ;
chacun dudit terminal d'émetteur et dudit terminal de récepteur ayant un moyen de positionnement (132) pour produire des données de positionnement, ledit moyen de positionnement comprenant un système de positionnement global fournissant lesdites données de positionnement en temps réel ;
ledit dispositif de relais ayant un moyen pour chercher dans ladite base de données lorsque les données de positionnement produites par ledit moyen de positionnement sont fournies au dit dispositif de relais, pour sélectionner les données de publicité et/ou les données d'informations de guide qui correspondent aux dites données de positionnement, et pour envoyer les données de publicité sélectionnées et/ou les données d'informations de guide sélectionnées à chacun dudit terminal d'émetteur et dudit terminal de récepteur.

2. Système selon la revendication 1, dans lequel ledit terminal d'émetteur a une mémoire de données d'attributs (42) pour stocker des attributs d'un émetteur en tant que données d'attributs (102), ledit terminal d'émetteur a un moyen pour ajouter lesdites données d'attributs (102) aux données du corps du courrier électronique (104) pour générer des données de courrier électronique (106) lorsque le courrier électronique doit être envoyé au dit terminal de récepteur ; et dans lequel
ledit dispositif de relais a un moyen pour faire référence aux données d'attributs ajoutées aux données de courrier électronique envoyées dudit terminal d'émetteur, pour extraire les données de publicité et/ou les données d'informations de guide (108) qui correspondent aux dits attributs de ladite base de données, pour ajouter les données de publicité extraites et/ou les données d'informations de guide extraites aux données de corps de courrier électronique (104), et pour envoyer les données de courrier électronique résultantes au dit terminal de récepteur.

3. Système de publicité par courrier électronique selon la revendication 2, dans lequel ledit terminal d'émetteur a un moyen pour recevoir des données, ledit dispositif de relais comprenant un moyen pour envoyer les données de publicité extraites et/ou les données d'informations de guide extraites (112), avec lesdites données de courrier électronique ou séparément de celles-ci au dit terminal d'émetteur pendant que le dit terminal d'émetteur est connecté au dit réseau public pour envoyer le courrier électronique, lorsque les données de courrier électronique avec les données de publicité extraites et/ou les données d'informations de guide extraites ajoutées à celles-ci sont envoyées au dit terminal de récepteur.

4. Système de publicité par courrier électronique selon la revendication 2 ou 3, dans lequel les attributs représentés par lesdites données d'attributs (102) comprennent au moins le sexe, l'âge, la zone résidentielle, le passe-temps ou la profession.

5. Système de publicité par courrier électronique selon la revendication 4, dans lequel ledit sexe et ledit âge sont représentés par des informations à deux bits, ledit sexe étant représenté par un bit affecté à homme ou femme, et ledit âge étant représenté par un bit affecté aux âges sous un âge prédéterminé ou aux âges supérieurs ou égaux au dit âge prédéterminé.

6. Système de publicité par courrier électronique selon la revendication 4, dans lequel ladite zone résidentielle est remplacée par un numéro postal.

7. Système de publicité par courrier électronique selon l'une quelconque des revendications 1 à 6, dans lequel les données de publicité envoyées dudit dispositif de relais vers chacun dudit terminal d'émetteur et dudit terminal de récepteur comprennent des données de publicité sur bannière.

8. Système de publicité par courrier électronique selon l'une quelconque des revendications 1 à 7, dans lequel lesdites données de publicité sont associées à des informations de numéro d'interrogation (119) d'un annonceur ajoutées à celles-ci, et une demande de données détaillées sur les données de publicité et/ou une demande d'un élément concernant les données de publicité sont automatiquement faites par l'intermédiaire du réseau public au dit annonceur en réponse à l'opération de chacun desdits terminaux en ce qui concerne lesdites informations de numéro d'interrogation.

9. Système de publicité par courrier électronique selon l'une quelconque des revendications 1 à 6, dans lequel lesdites données d'informations de guide sont associées à des informations de numéro d'interrogation (119) d'un prestataire d'informations de guide ajoutées à celles-ci, et une demande de données détaillées sur les données d'informations de guide et/ou une demande d'un élément concernant les données d'informations de guide sont automatiquement faites par l'intermédiaire du réseau public au dit prestataire d'informations de guide en réponse à l'opération de chacun desdits terminaux en ce qui concerne lesdites informations de numéro d'interrogation.

10. Système de publicité par courrier électronique selon la revendication 2, dans lequel ledit réseau public (12A) a une pluralité de stations de base (20X), (20Y), ledit dispositif de relais (22) étant disposé dans chacune desdites stations de base (20X), (20Y) ;
ladite station de base (20X) qui gère ledit terminal d'émetteur (16A) ayant un moyen pour envoyer des données de courrier électronique (106) dudit terminal d'émetteur avec les données d'attributs (102) ajoutées à celles-ci, par l'intermédiaire du réseau public vers la station de base qui gère ledit terminal de récepteur ;
ledit dispositif de relais (22Y) de la station de base (20Y) qui gère ledit terminal de récepteur (16B) ayant un moyen pour faire référence aux données d'attributs (102) ajoutées aux dites données de courrier électronique (106), pour extraire des données de publicité et/ou des données d'informations de guide correspondant aux dites données d'attributs dans ladite base de données (24Y), (26Y) et, pour ajouter les données de publicité extraites et/ou les données d'informations de guide extraites aux dites données de courrier électronique, et pour envoyer les données de courrier électronique résultantes (110) de ladite station de base qui gère ledit terminal de récepteur vers ledit terminal de récepteur.

11. Terminal de courrier électronique (16) pour générer, afficher, et envoyer et recevoir du courrier électronique par l'intermédiaire d'un réseau public (12), et pour recevoir des données de publicité et/ou des données d'informations de guide (108), ledit terminal ayant :
un moyen de positionnement (132) pour produire des données de positionnement, ledit moyen de positionnement (132) comprenant un système de positionnement global agencé pour fournir lesdites données de positionnement en temps réel ; et un dispositif de relais (22) agencé pour recevoir lesdites données de positionnement, pour sélectionner dans une base de données (24), (26) des données de publicité et/ou des données d'informations de guide correspondant aux dites données de positionnement et pour envoyer les données de publicité sélectionnées et/ou les données d'informations de guide sélectionnées au dit terminal de courrier électronique (16).

12. Terminal de courrier électronique (16) selon la revendication 11, dans lequel lesdites données de publicité reçues et/ou lesdites données d'informations de guide reçues comprennent en outre des informations de numéro d'interrogation d'un annonceur et/ou d'un prestataire d'informations de guide ; ledit terminal (16) comprenant en outre :
une unité de commande (50) exploitable par rapport aux dites informations de numéro d'interrogation, pour faire automatiquement une demande de données détaillées concernant les données de publicité et/ou les données d'informations de guide et/ou une demande d'un élément concernant les données de publicité et/ou les données d'informations de guide par l'intermédiaire dudit réseau public au dit annonceur et/ou au dit prestataire d'informations de guide.

13. Terminal de courrier électronique selon la revendication 12, dans lequel lesdites données de publicité comprennent des données de publicité sur bannière.

14. Dispositif de relais (22) connecté à un réseau public (12), (14) pour accéder à une base de données (24), (26), ledit dispositif de relais étant agencé pour recevoir des données de positionnement de système de positionnement global en temps réel d'un terminal de courrier électronique (16), ledit dispositif de relais (22) comprenant :
un moyen de recherche dans ladite base de données (24), (26) de données de publicité et/ou de données d'informations de guide correspondant aux dites données de positionnement ;
un moyen pour envoyer les données de publicité sélectionnées et/ou les données d'informations de guide sélectionnées au dit terminal de courrier électronique (16).
